(19) **Europäisches Patentamt / European Patent Office / Office européen des brevets**

(11) **EP 4 756 963 A1**

(12) # EUROPEAN PATENT APPLICATION

(43) Date of publication:
**10.06.2026 Bulletin 2026/24**

(21) Application number: **25221959.7**

(22) Date of filing: **09.12.2025**

(51) International Patent Classification (IPC):
*H01M 10/0562* $^{(2010.01)}$   *H01M 10/052* $^{(2010.01)}$

(52) Cooperative Patent Classification (CPC):
**H01M 10/0562; H01M 10/052**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.12.2024 KR 20240181633**

(71) Applicants:
• **SK innovation Co., Ltd.**
**Seoul 03188 (KR)**

• **SK On Co., Ltd.**
**Seoul 03161 (KR)**

(72) Inventors:
• **PARK, Chan Hwi**
**34124 Daejeon (KR)**
• **LEE, Myung Suk**
**34124 Daejeon (KR)**

(74) Representative: **Stolmár & Partner**
**Patentanwälte PartG mbB**
**Blumenstraße 17**
**80331 München (DE)**

(54) **SOLID ELECTROLYTE FOR LITHIUM SECONDARY BATTERY AND LITHIUM SECONDARY BATTERY INCLUDING THE SAME**

(57)    A solid electrolyte for a lithium secondary battery according to embodiments of the present disclosure may comprise a sulfide compound represented by Formula 1 below and may include a $PS_4^{3-}$ unit and a $BS_3^{3-}$ unit. Accordingly, the ionic conductivity of a lithium secondary including the solid electrolyte for a lithium secondary battery can be improved.

[Formula 1]        $Li_{6-a}B_bP_{1-b}S_{5-b}X_{1-a}$

(in Formula 1, a and b may satisfy $0 \leq a < 1$, and $0 < b < 1$, and X may be at least one element selected from the group consisting of F, Cl, Br and I).

[FIG. 1]

Li
P
S
Cl
B

EP 4 756 963 A1

**Description**

BACKGROUND

1. Field of the Invention

The present disclosure relates to a solid electrolyte for a lithium secondary battery and a lithium secondary battery including the same. More specifically, the present disclosure relates to a solid electrolyte for a lithium secondary battery which includes a sulfide compound and a lithium secondary battery including the solid electrolyte.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickel-cadmium battery, and a nickel-hydrogen battery. Among these, the lithium secondary battery is actively developed and applied due to its high operating voltage, high energy density per unit weight, and advantages in charging speed and weight reduction.

Since commercially available lithium secondary batteries mainly use liquid electrolytes, there are safety issues such as leakage, ignition, and explosion due to sudden environmental changes, including temperature fluctuations, external impacts and the like. To address these problems, research has been conducted to solidify the electrolyte, thereby enhancing stability and increasing energy density.

All-solid-state batteries may include solid-state electrolytes, such as polymers, oxides, or sulfides as electrolytes. Accordingly, stability against ignition and explosion caused by external impacts or external environmental fluctuations can be enhanced.

Sulfide-based solid electrolytes have low hardness, making them easy to press and mold at room temperature, and research on such electrolytes has been actively conducted due to their higher ionic conductivity compared to oxide-based solid electrolytes.

SUMMARY

An object of the present disclosure is to provide a solid electrolyte for a lithium secondary battery having improved stability and ionic conductivity.

Another object of the present disclosure is to provide a lithium secondary battery having improved stability and electrochemical properties.

A solid electrolyte for a lithium secondary battery according to exemplary embodiments of the present disclosure may include a sulfide compound represented by Formula 1 below and including a $PS_4^{3-}$ unit and a $BS_3^{3-}$ unit:

$$[\text{Formula 1}] \qquad Li_{6-a}B_bP_{1-b}S_{5-b}X_{1+a}$$

In Formula 1, $0 \leq a < 1$, $0 < b < 1$, and X may be at least one element selected from the group consisting of F, Cl, Br and I.

In some embodiments, the sulfide compound may have an argyrodite-type crystal structure.

In some embodiments, the molar ratio of the $BS_3^{3-}$ unit to the $PS_4^{3-}$ unit in the sulfide compound may be greater than 0 and less than or equal to 1.

In some embodiments, the molar ratio of the $BS_3^{3-}$ unit to the $PS_4^{3-}$ unit in the sulfide compound may be 0.1 to 0.4.

In some embodiments, in Formula 1, $0 < b \leq 0.5$.

In some embodiments, in Formula 1, $0 < b < 0.25$.

In some embodiments, in Formula 1, $0.125 \leq b \leq 0.5$.

In some embodiments, in Formula 1, X may include at least one of Cl and Br.

In some embodiments, the ionic conductivity of the sulfide compound may be 1 mS/cm to 3 mS/cm.

In some embodiments, the radial distribution function (RDF) for boron (B) of the sulfide compound may have a peak in the range of 1.7 Å to 1.9 Å.

A lithium secondary battery according to exemplary embodiments of the present disclosure may include: a cathode; an anode disposed opposite the cathode; and a solid electrolyte layer disposed between the cathode and the anode, wherein at least one of the cathode, the anode, and the solid electrolyte layer may include the above-described solid electrolyte for a lithium secondary battery.

In some embodiments, the solid electrolyte layer may include the solid electrolyte for a lithium secondary battery.

In some embodiments, one of the cathode and the anode may be a lithium electrode.

The sulfide-based solid electrolyte for a lithium secondary battery according to one embodiment may include a $PS_4^{3-}$ unit and a $BS_3^{3-}$ unit. Accordingly, lithium channels may be expanded within the internal structure of the solid electrolyte. Therefore, the electrical conductivity and capacity characteristics of a lithium secondary battery including the solid electrolyte can be improved.

The sulfide-based solid electrolyte for a lithium secondary battery may have an argyrodite-type crystal structure. Therefore, the electrical conductivity and capacity characteristics of a lithium secondary battery including the solid electrolyte can be improved.

The content of $PS_4^{3-}$ ions in the sulfide-based solid electrolyte for a lithium secondary battery may be equal to or greater than that of $BS_3^{3-}$ ions. Accordingly, lithium channels may be expanded within the solid electrolyte without collapsing the argyrodite crystal structure.

BRIEF DESCRIPTION OF THE DRAWINGS

The above and other objects, features and advantages of the present disclosure will be more clearly understood from the following detailed description taken in conjunction with the accompanying drawings, in which:

FIG. 1 is a schematic diagram illustrating a crystal structure of a solid electrolyte according to one embodiment;
FIGS. 2A and 2B are graphs illustrating radial distribution functions (RDFs) of a sulfide compound, respectively; and
FIG. 3 is a graph illustrating stabilization energy levels for lithium reactions of sulfide-based solid electrolytes in Examples 1 to 4 and Comparative Examples 1 to 5.

DETAILED DESCRIPTION

According to one embodiment, there are provided a sulfide-based solid electrolyte which includes a $BS_3^{3-}$ unit and a $PS_4^{3-}$ unit, and a lithium secondary battery including the sulfide-based solid electrolyte.

Hereinafter, the embodiments of the present disclosure will be described in more detail with reference to the accompanying drawings. However, the drawings attached to the present disclosure are merely illustrative of some embodiments of the present disclosure to aid in understanding the technical spirit of the invention together with the foregoing description. Therefore, the present disclosure should not be construed as being limited to the matters illustrated in the drawings.

When the terms "above," "on," or "between" are used herein to describe that a component is "disposed," "positioned," or "interposed," this is intended to include not only cases where the component is directly placed, but also cases where one or more other components are interposed therebetween.

If a compound represented by a formula used herein has isomers, the compound represented by the formula is intended to encompass the isomers as well, and thus refers to a representative formula including such isomers.

<Solid electrolyte for a lithium secondary battery>

According to some embodiments, the solid electrolyte for a lithium secondary battery may include a sulfide compound. For example, the solid electrolyte for a lithium secondary battery may be a sulfide-based solid electrolyte.

The sulfide compound may be represented by Formula 1 below.

[Formula 1]     $Li_{6-a}B_bP_{1-b}S_{5-b}X_{1+a}$

In Formula 1, a and b may satisfy $0 \leq a < 1$, and $0 < b < 1$, and X may be a halogen element. For example, X may include at least one element selected from the group consisting of F, Cl, Br and I.

In some embodiments, the sulfide compound may have an argyrodite-type crystal structure.

The argyrodite-type crystal structure may refer to a crystal structure similar to or substantially identical to that of the mineral $Ag_8GeS_6$. For example, the solid electrolyte having an argyrodite-type crystal structure may include a Li-argyrodite-type compound exhibiting lithium ion conductivity. The Li-argyrodite-type compound may have a cubic phase at low temperatures and an orthorhombic phase at high temperatures.

The sulfide compound includes a halogen element (e.g., F, Cl, Br, or I) and may have an argyrodite structure, thereby improving the output characteristics and capacity characteristics of the lithium secondary battery.

For example, when a Li-argyrodite compound contains a halogen atom, voids may be formed at Li sites within the argyrodite structure. Accordingly, the crystal structure of the Li-argyrodite compound may be stabilized, and lithium ion conductivity can be improved.

In some embodiments, the molar amount of phosphorus (P) included in the sulfide compound may be equal to or greater than that of boron (B). For example, in Formula 1, a may satisfy $0 \leq a \leq 0.5$ or $0 \leq a < 0.5$, and b may satisfy $0 < b \leq 0.5$ or $0 < b < 0.5$.

Within the above range, lithium channels may be expanded without collapsing the argyrodite structure of the sulfide compound, thereby improving ion conductivity.

In one embodiment, in Formula 1, b may satisfy $0 < b < 0.25$, $0 < b < 0.2$, $0 < b < 0.18$, $0 < b < 0.15$, $0.125 \leq b \leq 0.5$, $0.25 \leq b \leq 0.5$, or $0.375 \leq b \leq 0.5$. Within these ranges, the stability of the lithium secondary battery can be further improved, while ionic conductivity may be further increased.

In some embodiments, in Formula 1, X may include at least one element selected from chlorine (Cl) and bromine (Br).

Cl and Br have relatively small ionic radii, so that their elemental size difference from sulfur (S) may be smaller than that of other halogen elements. Accordingly, even when they are substituted within the argyrodite-type crystal structure, the crystal structure may remain undistorted, and sufficient lithium-ion channels can be maintained. Therefore, the electrical conductivity and stability of the solid electrolyte can be improved.

According to some embodiments, the sulfide compound may include a $BS_3^{3-}$ unit and a $PS_4^{3-}$ unit.

The "X unit" may refer to an X structure present in the sulfide compound. The X unit may exist either in an ionic form or in a bonded state with other units within the compound.

For example, the X unit may be an X ion. For instance, $Li_3PS_4$ contains one $PS_4^{3-}$ unit bonded to three lithium ions. For example, $Li_3BS_3$ contains one $BS_3^{3-}$ unit bonded to three lithium ions.

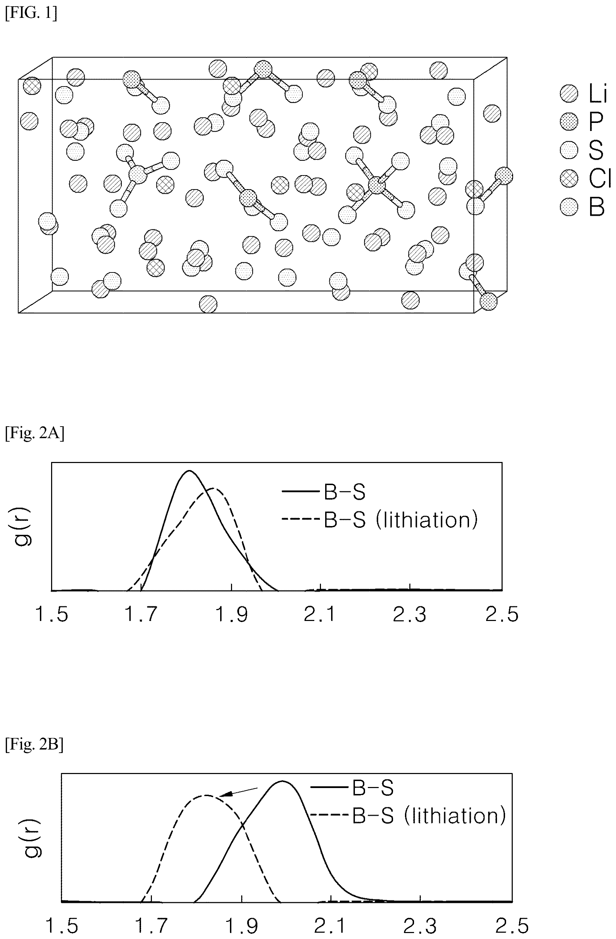

FIG. 1 is a schematic diagram illustrating the structure of a solid electrolyte for a lithium secondary battery according to some embodiments.

In some embodiments, the sulfide compound may be formed from a lithium phosphorus sulfide (LPS)-based solid electrolyte including Li, P and S. For example, the sulfide compound may be formed by substituting phosphorus (P) ions in the LPS-based solid electrolyte with boron (B) ions.

For example, the LPS-based solid electrolyte may be represented by Formula 2 below.

$$[\text{Formula 2}] \qquad L_c M_d P_e S_f X_g$$

In Formula 2, c, d, e, f and g may satisfy $0 < c \leq 12$, $0 \leq d \leq 6$, $0 \leq e \leq 6$, $0 < f \leq 12$, and $0 \leq g \leq 9$.

L may include an alkali metal such as Li, Na, K, Rb, or Cs.

M may include at least one element selected from the group consisting of B, Al, Ga, In, Si, Ge, Sn, Pb, As, Sb, Bi, Ti, V, Cr, Mn, Fe, Co, Ni, Cu, Y, Zr, Nb, Mo, Tc, Ru, Rh, Pd, Ag, Hf, Ta and W, and X may include at least one element selected from the group consisting of F, Cl, Br, I and O.

Since P-S bonds have relatively low bond energy, they can be easily broken during charge and discharge cycles. Therefore, LPS-based compounds having only P-S bonds are prone to oxidation or reduction, which may deteriorate the electrochemical stability and ionic conductivity of the solid electrolyte. For example, when P-S bonds decompose, they may react with oxygen to form P-O bonds, and sulfur atoms may be released from the solid electrolyte, thereby lowering the ionic conductivity.

According to some embodiments, the sulfide compound may have high interatomic bond energy due to the presence of B-S bonds. Therefore, the oxidation stability and ionic conductivity of the solid electrolyte can be simultaneously improved.

The sulfide compound may have a structure in which the $PS_4^{3-}$ units of the LPS-based solid electrolyte are substituted with $BS_3^{3-}$ units. For example, some of the $PS_4^{3-}$ units of the LPS-based solid electrolyte may be replaced with $BS_3^{3-}$ units. Accordingly, the structural stability of the sulfide compound can be enhanced, and the electrochemical characteristics of the solid electrolyte can be improved.

For example, the $PS_4^{3-}$ unit has a tetrahedral structure with fourfold coordination centered on P and may be a trivalent anion. The $BS_3^{3-}$ unit has a planar structure with threefold coordination centered on B and may be a trivalent anion. The $BS_4^{5-}$ unit has a tetrahedral structure with fourfold coordination centered on B and may be a pentavalent anion.

For example, if the $PS_4^{3-}$ unit is substituted with a $BS_4^{5-}$ unit, the oxidation state of the anion may change, thereby disrupting charge balance. Therefore, during charge and discharge cycles, bonds within the $BS_4^{5-}$ unit may be broken, leading to collapse of the crystal structure and degradation of structural and electrochemical stability.

In some embodiments, if the $PS_4^{3-}$ unit is substituted with a $BS_3^{3-}$ unit, the oxidation states of the anions remain identical between the substituted units, thereby maintaining charge balance. Accordingly, structural changes in the sulfide compound caused by substitution between units can be minimized, allowing the structure of the sulfide compound to remain stable.

Therefore, the structural stability of the solid electrolyte can be improved, and the electrical conductivity and capacity characteristics of the lithium secondary battery can also be enhanced.

In some embodiments, the molar ratio of the $BS_3^{3-}$ unit to the $PS_4^{3-}$ unit ($BS_3^{3-}/PS_4^{3-}$) in the sulfide compound may be greater than 0 and equal to or less than 1. Within this range, the structural stability and ionic conductivity of the sulfide compound can be further improved.

In one embodiment, the molar ratio of the $BS_3^{3-}$ unit to the $PS_4^{3-}$ unit ($BS_3^{3-}/PS_4^{3-}$) in the sulfide compound may be 0.1 to 0.4, for example, 0.1 to 0.2. Within this range, stability against lithium metal can be further enhanced, and the solid electrolyte can exhibit higher ionic conductivity.

FIGS. 2A and 2B are graphs illustrating radial distribution functions (RDFs) of a sulfide compound, respectively.

In FIGS. 2A and 2B, the horizontal axis (x-axis) represents the interatomic distance (Å), and the vertical axis (y-axis) represents the atomic presence probability (dimensionless).

The radial distribution function (RDF) is a function used to represent the lattice structure that appears in dense materials with a radial distribution. The RDF expresses the distribution of atoms or molecules around a reference atom or molecule as a function of the distance from that reference atom. For example, the RDF may provide information on the distance between nearest neighboring atoms and the average coordination number. Therefore, the degree of structural change in a compound can be evaluated by variations in the RDF peak values.

In some embodiments, a peak ($I_B$) may appear in the radial distribution function (RDF) for boron (B) in the sulfide compound within a range of 1.7Å to 1.9Å.

In one embodiment, the radial distribution function (RDF) may be calculated from structure factors of the sulfide compound obtained through X-ray diffraction (XRD) analysis. For example, the structure factors of the sulfide compound obtained from the X-ray diffraction pattern may be Fourier-transformed to derive the RDF for each atom.

In one embodiment, the radial distribution function may be derived using a density functional theory (DFT) simulation. For example, when the crystal structure of the sulfide compound is already known, the radial distribution function can be calculated using a DFT simulation based on the crystal structure.

In the radial distribution function for boron (B), the x-axis represents the interatomic distance relative to the position of the boron atom, and the y-axis represents the probability of atomic presence as a function of the distance from the boron atom. The appearance of a peak in the radial distribution function indicates the presence of a convex region along the y-axis, representing a higher probability of atomic presence in that region.

The RDF peak ($I_B$) for B is positioned within the above range, thereby further improving the electrochemical stability of the sulfide compound.

For example, during charge and discharge processes, the bonds between elements (for example, B-S bonds) may be broken due to lithiation of the solid electrolyte, resulting in changes in the interatomic distances and coordination numbers associated with B.

Referring to FIG. 2A, a sulfide compound exhibiting an RDF peak ($I_B$) in the range of 1.7 Å to 1.9 Å may maintain the RDF peak within the same range even after lithiation. Therefore, the B-S bonds in the sulfide compound may remain undisturbed even after repeated charge and discharge cycles, resulting in minimal structural changes in the compound.

FIG. 2B is a graph illustrating the RDF of a sulfide compound exhibiting an RDF peak ($I_B$) near 2.0 Å. A sulfide compound having an RDF peak in a region exceeding 1.9 Å may undergo structural changes due to lithiation, causing a shift in the position of the RDF peak.

For example, the sulfide compound may include $BS_3^{3-}$ units having either an amorphous or crystalline structure. For example, the $BS_3^{3-}$ ion may exist in a bonded state with other ions (such as Li ions).

In one embodiment, the sulfide compound may be a crystalline compound. For example, the $BS_3^{3-}$ units may combine with Li ions to form a crystalline phase.

In another embodiment, the sulfide compound may be amorphous. For example, the $BS_3^{3-}$ units may combine with Li ions to form an amorphous phase, and the sulfide compound may be an ion-conductive glass.

In one embodiment, the sulfide compound may be a glass-ceramic in which a crystalline phase is dispersed within an amorphous matrix.

In one embodiment, the sulfide compound may not include $BS_4^{5-}$ units. For example, the sulfide compound may not include $BS_4^{5-}$ ions or structures in which $BS_4^{5-}$ ions are bonded with other ions. The $BS_4^{5-}$ units may be converted into $BS_3$ units upon lithiation, thereby intensifying changes in the crystal structure and reducing stability.

In one embodiment, the sulfide compound may further include $BS_4^{5-}$ ions. For example, a portion of the $PS_4^{3-}$ unit may be substituted with $BS_4^{5-}$ ions.

In some embodiments, the ionic conductivity of the sulfide compound may be 1 mS/cm to 3 mS/cm. Accordingly, the internal resistance of the lithium secondary battery can be reduced, and both capacity and output characteristics can be further improved.

In one embodiment, the solid electrolyte for the lithium secondary battery may further include another type of solid electrolyte in addition to the above-described sulfide-based solid electrolyte. For example, the solid electrolyte may further include an oxide-based solid electrolyte.

**<Lithium secondary battery>**

According to one embodiment, the lithium secondary battery may include a cathode and an anode disposed opposite the cathode.

In some embodiments, the cathode may include a cathode current collector and a cathode active material layer formed on the cathode current collector. For example, the cathode active material layer may include a cathode active material, a solid electrolyte, a binder, and/or a conductive material. For example, the cathode may be prepared by mixing and stirring the cathode active material with the solid electrolyte, conductive material, and/or binder to prepare a cathode slurry, and then applying, drying, and pressing the cathode slurry onto the cathode current collector.

The cathode current collector may include stainless steel, nickel, aluminum, titanium, copper, or an alloy thereof, and may specifically include aluminum or an aluminum alloy.

The cathode active material may include a compound represented by Formula 3 below.

$$[\text{Formula 3}] \qquad \text{Li}_y\text{Ni}_z\text{Me}_{1-z}\text{O}_2$$

In Formula 3, y may satisfy $0.95 \leq y \leq 1.08$, z may satisfy $0.5 \leq z < 1$, and Me may include Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba, Zr, or a combination thereof.

In one embodiment, the cathode active material includes nickel (Ni) and may further include at least one of cobalt (Co) or manganese (Mn). For example, a nickel-cobalt-manganese (NCM)-based lithium oxide may be used as the cathode active material.

For example, nickel (Ni) may be provided as a metal associated with the capacity of the lithium secondary battery. The higher the content of nickel, the greater the improvement in capacity and output of the lithium secondary battery. However, if the content of nickel increases excessively, the cycle life of the lithium secondary battery may be reduced, and it may be disadvantageous in terms of mechanical and electrical stability.

In one embodiment, the conductivity or resistance of the cathode may be improved by cobalt (Co), as well as the mechanical and electrical stability of the cathode may be improved by manganese (Mn).

The chemical structure represented by Formula 3 indicates a bonding relationship among elements included in the layered structure or crystal structure of the cathode active material, and does not exclude the presence of additional elements. For example, Me may include Co and/or Mn, and Co and Mn may be provided as main active elements of the cathode active material together with Ni. Formula 3 is provided to represent the bonding relationship among the main active elements and should be understood as encompassing the introduction or substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 3.

In one embodiment, the solid electrolyte included in the cathode may contain the above-described sulfide compound.

The conductive material may be included to promote electron migration between the cathode active material particles. For example, the conductive material may include carbon-based conductive materials such as graphite, carbon black, graphene, or carbon nanotubes; and/or metal-based conductive materials such as tin, tin oxide, and titanium oxide; and perovskite materials such as $\text{LaSrCoO}_3$, and $\text{LaSrMnO}_3$.

In some embodiments, the cathode active material layer may further include a binder. For example, the binder may include a vinylidene fluoride-hexafluoropropylene copolymer (PVDF-co-HFP), polyvinylidene fluoride (PVDF), polyacrylonitrile (PAN), polymethyl methacrylate (PMMA), or nitrile butadiene rubber (NBR).

In some embodiments, the anode may include an anode current collector and an anode active material layer formed on the anode current collector. For example, the anode active material layer may include an anode active material, a solid electrolyte, a binder, and/or a conductive material. For example, the anode may be prepared by mixing and stirring the anode active material with the solid electrolyte, conductive material, and/or binder to prepare an anode slurry, and then applying, drying, and pressing the anode slurry onto the anode current collector.

The anode current collector may include gold, stainless steel, nickel, aluminum, titanium, copper, or an alloy thereof, and may specifically include copper or a copper alloy.

The anode active material may be a material capable of absorbing and desorbing lithium ions. For example, the anode active material may include carbon-based materials such as crystalline carbon, amorphous carbon, carbon composites, or carbon fibers; a lithium alloy; silicon or tin; or the like. Examples of the amorphous carbon may include hard carbon, coke, mesocarbon microbeads (MCMBs) calcined at 1500°C or lower, mesophase pitch-based carbon fibers (MPCFs) or the like. Examples of the crystalline carbon include graphite carbons such as natural graphite, graphitized coke, graphitized MCMBs, and graphitized MPCFs. Elements included in the lithium alloy may include aluminum, zinc, bismuth, cadmium, antimony, silicon, lead, tin, gallium, or indium.

The anode active material layer may further include an anode binder and/or an anode conductive material. The anode binder and conductive material may be substantially the same as or similar to the above-described cathode binder and conductive material. For example, the anode binder may be an aqueous binder such as styrene-butadiene rubber (SBR). In addition, the anode binder may be used together with a thickener such as carboxymethyl cellulose (CMC).

In one embodiment, the solid electrolyte included in the anode may include the above-described sulfide compound. For example, the lithium secondary battery may be provided as an all-solid-state battery.

According to some embodiments, a solid electrolyte layer may be interposed between the cathode and the anode. The solid electrolyte layer may include a polymer electrolyte, an oxide-based solid electrolyte, or a sulfide-based solid electrolyte.

In some embodiments, the oxide-based solid electrolyte may include a metal oxide or an ion-conducting compound containing oxygen. For example, examples of the oxide-based solid electrolyte may include metal oxides such as $Al_2O_3$, $ZnO_2$, $Ce_2O_3$, $TiO_2$, $ZrO_2$, $HfO_2$, $MnO_2$, $MgO$, $WO_2$ $V_2O_5$, LLTO-based compounds, $Li_6La_2CaTa_2O_{12}$, $Li_6La_2ANb_2O_{12}$ (where A is Ca or Sr), $Li_2Nd_3TeSbO_{12}$, $Li_3BO_{2.5}N_{0.5}$, $Li_9SiAlO_8$, LAGP-based compounds, LATP-based compounds, $Li_{1+x}Ti_{2-x}Al_xSi_y(PO_4)_{3-y}(0 \leq x \leq 1, \ 0 \leq y \leq 1)$, $LiAl_xZr_{2-x}(PO_4)_3(0 \leq x \leq 1, \ 0 \leq y \leq 1)$, $LiTi_xZr_{2-x}(PO_4)_3(0 \leq x \leq 1, \ 0 \leq y \leq 1)$, LISICON-based compounds, LIPON-based compounds, perovskite compounds, NASICON compounds, and LLZO compounds.

In some embodiments, the solid electrolyte layer may further include a sulfide-based solid electrolyte in addition to the above-described sulfide compound. For example, the sulfide-based solid electrolyte may include an LPS-based solid electrolyte containing Li, P and S; an LGPS-based solid electrolyte containing Li, P, Ge and S; or an LSiPSCl-based solid electrolyte containing Li, Si, P, S and Cl.

For example, as the sulfide-based solid electrolyte, $Li_2S\text{-}P_2S_5$, $Li_{10}GeP_2S_{12}$, $Li_{10}SnP_2S_{12}$, $Li_{9.54}Si_{1.74}P_{1.44}S_{11.7}Cl_{0.3}$, $Li_{10}(Si_{0.5}Ge_{0.5})P_2S_{12}$, $Li_{10}(Ge_{0.5}Sn_{0.5})P_2S_{12}$, $Li_{10}(Si_{0.5}Sn_{0.5})P_2S_{12}$, $Li_{10}GeP_2S_{11.7}O_{0.3}$, $Li_{9.6}P_3S_{12}$, $Li_9P_3S_9O_3$, $Li_{10.35}Ge_{1.35}P_{1.63}S_{12}$, $Li_{10.35}Si_{1.35}P_{1.65}S_{12}$, $Li_{9.81}Sn_{0.81}P_{2.19}S_{12}$, $Li_{9.42}Si_{1.02}P_{2.1}S_{9.96}O_{2.04}$, and $Li_6PS_5Cl$ may be used.

In some embodiments, the solid electrolyte layer may include the above-described sulfide compound. By the sulfide compound, the ionic conductivity and electrochemical stability of the solid electrolyte layer may be enhanced.

In one embodiment, either the cathode or the anode may include lithium metal or a lithium alloy.

For example, when the cathode or anode is a lithium electrode, the solid electrolyte layer may decompose upon contact with lithium metal. In addition, when the secondary battery operates at a relatively high voltage, the decomposition and structural change of the solid electrolyte may be accelerated.

According to one embodiment, when the solid electrolyte layer includes the above-described sulfide compound, the electrochemical stability of the solid electrolyte layer may be further enhanced. Therefore, even when operating at a high voltage or in contact with the lithium electrode, the internal structure of the solid electrolyte may remain stable, thereby improving the cycle life characteristics and stability of the secondary battery.

According to exemplary embodiments, an electrode cell may be defined by the cathode, the anode and the solid electrolyte layer, and a plurality of the electrode cells may be stacked to form an electrode assembly. For example, the electrode assembly may be formed by winding, stacking, folding, or the like.

The electrode assembly may be accommodated in a case to define a lithium secondary battery. The lithium secondary battery may be manufactured, for example, in a cylindrical shape using a can, a prismatic shape, a pouch shape or a coin shape.

Electrode tabs (cathode tabs and anode tabs) may protrude from the cathode current collector and the anode current collector, respectively, and may extend to one side of the case of the secondary battery. The electrode tabs may be welded together with the one side of the case to form electrode leads (a cathode lead and an anode lead) that extend or are exposed to the outside of the case.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of the present disclosure, and such changes and modifications are to be regarded as falling within the scope of the appended claims.

**Examples and Comparative Examples: Design of simulation technique for solid electrolyte evaluation**

To evaluate the ionic conductivity of a novel sulfide solid electrolyte, an argyrodite sulfide-based solid electrolyte was designed with the composition shown in Table 1, and its lattice structure was stabilized using a density functional theory (DFT) simulation. The DFT simulation was performed using the Vienna Ab initio Simulation Package (VASP) software (licensed by the University of Vienna). Density Functional Theory (DFT) was used together with the Generalized Gradient Approximation applying the Perdew-Burke-Emzerhof functional (GGA-PBE) to calculate the structural optimization of the molecular unit system, the total energy (potential energy + kinetic energy), and the radial distribution function (RDF).

The crystal structures of the solid electrolytes of the examples and comparative examples were designed through simulations by adjusting the composition of the argyrodite sulfide-based solid electrolytes as shown in Table 1.

[TABLE 1]

|  | Composition of solid electrolyte |
|---|---|
| Example 1 | $Li_6B_{0.125}P_{0.875}S_{4.875}Cl$ |
| Example 2 | $Li_6B_{0.25}P_{0.75}S_{4.75}Cl$ |
| Example 3 | $Li_6B_{0.375}P_{0.625}S_{4.625}Cl$ |
| Example 4 | $Li_6B_{0.5}P_{0.5}S_{4.5}Cl$ |
| Example 5 | $Li_6B_{0.125}P_{0.875}S_{4.875}Br$ |
| Example 6 | $Li_6B_{0.25}P_{0.75}S_{4.75}Br$ |
| Comparative Example 1 | $Li_6PS_5Cl$ |
| Comparative Example 2 | $Li_{0.25}B_{0.125}P_{0.875}S_5Cl$ |
| Comparative Example 3 | $Li_{6.5}B_{0.25}P_{0.75}S_5Cl$ |
| Comparative Example 4 | $Li_{6.75}B_{0.375}P_{0.625}S_5Cl$ |
| Comparative Example 5 | $Li_7B_{0.5}P_{0.35}S_5Cl$ |
| Comparative Example 6 | $Li_6PS_5Br$ |
| Comparative Example 7 | $Li_{6.25}B_{0.125}P_{0.875}S_5Br$ |
| Comparative Example 8 | $Li_{6.5}B_{0.25}P_{0.75}S_5Br$ |

## Measurement Examples

The properties of the solid electrolytes of the examples and comparative examples were analyzed using the following method, and the results are shown in Table 2.

(1) Boron atom (B) substitution amount

The boron atom (B) substitution amount was calculated as the ratio (B/(B+P)) of the molar amount of B atoms to the total molar amount of B and P atoms in the argyrodite sulfide-based solid electrolytes used in the examples and comparative examples.

(2) Evaluation of radial distribution function

In the examples and comparative examples, the radial distribution function was derived using ab initio molecular dynamics (AIMD) simulations based on density functional theory (DFT). For example, when the molecular structure of the sulfide compound is already known, the radial distribution function between desired elements (e.g., B and S) may be calculated using AIMD simulations based on the molecular structure.

Specifically, the trajectory data of the elements within the unit cell obtained through the AIMD simulations were input into the Interaction Structure Analysis of Amorphous and Crystalline Systems (ISAACS) program, and the RDF calculation command was executed to obtain the radial distribution function graph.

The presence and movement of peaks in the range of 1.7 Å to 1.9 Å were evaluated from the derived RDF graph.

This radial distribution function may also be experimentally obtained from X-ray diffraction (XRD) patterns and is used to determine interatomic bond distances.

<Evaluation criteria>

8

o: Peak detected

×: Peak not detected

(3) Evaluation of stabilization energy for Li reaction

When the solid electrolyte comes into contact with lithium metal, lithium atoms from the lithium metal may penetrate into the electrolyte, inducing a decomposition reaction in the solid electrolyte. The stability of the solid electrolytes of the examples and comparative examples against this decomposition reaction was quantitatively analyzed using the stabilization energy calculation method described below.

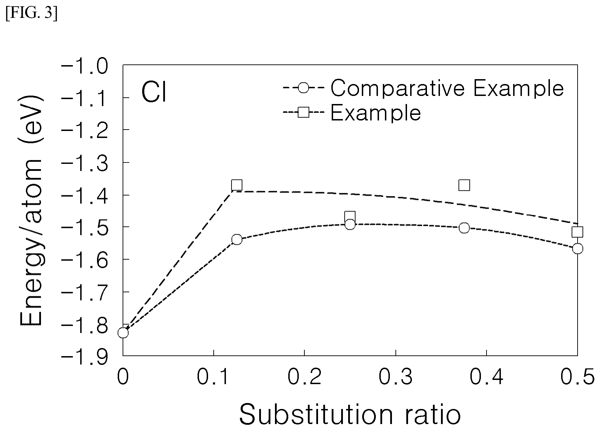

FIG. 3 is a graph illustrating stabilization energy levels for lithium reactions of sulfide-based solid electrolytes in Examples 1 to 4 and Comparative Examples 1 to 5.

$$Energy/atom = \left(E_{Arg+nLi} - E_{Arg} - nE_{Li}\right)/n$$

$E_{Arg+mLi}$: Total energy after n lithium atoms are added to argyrodite.
$E_{Arg}$: Total energy of argyrodite.
$E_{Li}$: Total energy of a single atom in lithium metal.
n: Number of lithium atoms added.

<Evaluation criteria>

o: Energy/atom value $\geq$ -1.5 eV

×: Energy/atom value < -1.5 eV.

[TABLE 2]

| Classification | Boron atom (B) substitution amount | Evaluation of radial distribution function (RDF) peak | Evaluation of stabilization energy for Li reaction |
|---|---|---|---|
| Example 1 | 0.125 | ○ | ○ |
| Example 2 | 0.25 | ○ | ○ |
| Example 3 | 0.375 | ○ | ○ |
| Example 4 | 0.5 | ○ | ○ |
| Example 5 | 0.125 | ○ | ○ |
| Example 6 | 0.25 | ○ | ○ |
| Comparative Example 1 | 0 | × | × |
| Comparative Example 2 | 0.125 | × | × |
| Comparative Example 3 | 0.25 | × | × |
| Comparative Example 4 | 0.375 | × | × |
| Comparative Example 5 | 0.5 | × | × |
| Comparative Example 6 | 0 | × | × |
| Comparative Example 7 | 0.125 | × | × |
| Comparative Example 8 | 0.25 | × | × |

Referring to Table 2, the solid electrolytes according to the examples, which exhibit a radial distribution function peak in the range of 1.7 Å to 1.9 Å, contain both $PS_4^{3-}$ and $BS_3^{3-}$ ions.

In contrast, the solid electrolytes according to the comparative examples contain no $BS_3^{3-}$ ions or contain only a very small amount of $BS_3^{3-}$ ions compared to $BS_4^{5-}$ ions.

Referring to FIG. 3, when the solid electrolytes contain the same halogen element and have the same substitution amounts of phosphorus and boron atoms, the solid electrolytes according to the examples exhibit higher energy levels than those according to the comparative examples. A solid electrolyte having a lower energy level may exhibit higher reactivity toward lithium and a less stable internal structure.

The invention relates also to the following numbered aspects:

Aspect 1. A solid electrolyte for a lithium secondary battery, comprising a sulfide compound represented by Formula 1 below and including a $PS_4^{3-}$ unit and a $BS_3^{3-}$ unit:

[Formula 1] $\quad$ $Li_{6-a}B_bP_{1-b}S_{5-b}X_{1+a}$

(in Formula 1, $0 \leq a < 1$, $0 < b < 1$, and X is at least one element selected from the group consisting of F, Cl, Br and I).

Aspect 2. The solid electrolyte for a lithium secondary battery according to aspect 1, wherein the sulfide compound has an argyrodite-type crystal structure.

Aspect 3. The solid electrolyte for a lithium secondary battery according to aspect 1 or 2, wherein the molar ratio of the $BS_3^{3-}$ unit to the $PS_4^{3-}$ unit in the sulfide compound is greater than 0 and less than or equal to 1.

Aspect 4. The solid electrolyte for a lithium secondary battery according to any one of aspects 1 to 3, wherein the molar ratio of the $BS_3^{3-}$ unit to the $PS_4^{3-}$ unit in the sulfide compound is 0.1 to 0.4.

Aspect 5. The solid electrolyte for a lithium secondary battery according to any one of aspects 1 to 4, wherein in Formula 1, $0 < b \leq 0.5$.

Aspect 6. The solid electrolyte for a lithium secondary battery according to any one of aspects 1 to 5, wherein in Formula 1, $0 < b < 0.25$.

Aspect 7. The solid electrolyte for a lithium secondary battery according to any one of aspects 1 to 6, wherein in Formula 1, $0.125 \leq b \leq 0.5$.

Aspect 8. The solid electrolyte for a lithium secondary battery according to any one of aspects 1 to 7, wherein in Formula 1, X includes at least one of Cl and Br.

Aspect 9. The solid electrolyte for a lithium secondary battery according to any one of aspects 1 to 8, wherein the ionic conductivity of the sulfide compound is 1 mS/cm to 3 mS/cm.

Aspect 10. The solid electrolyte for a lithium secondary battery according to any one of aspects 1 to 9, wherein the radial distribution function (RDF) for boron (B) of the sulfide compound has a peak in the range of 1.7 Å to 1.9 Å.

Aspect 11. A lithium secondary battery comprising:

a cathode;
an anode disposed opposite the cathode; and
a solid electrolyte layer disposed between the cathode and the anode,
wherein at least one of the cathode, the anode, and the solid electrolyte layer comprises the solid electrolyte for a lithium secondary battery according to any one of aspects 1 to 10.

Aspect 12. The lithium secondary battery according to aspect 11, wherein the solid electrolyte layer comprises the solid electrolyte for a lithium secondary battery.

Aspect 13. The lithium secondary battery according to aspect 11 or 12, wherein one of the cathode and the anode is a lithium electrode.

## Claims

1. A solid electrolyte for a lithium secondary battery, comprising a sulfide compound represented by Formula 1 below and including a $PS_4^{3-}$ unit and a $BS_3^{3-}$ unit:

[Formula 1] $\quad$ $Li_{6-a}B_bP_{1-b}S_{5-b}X_{1+a}$.

(in Formula 1, $0 \leq a < 1$, $0 < b < 1$, and X is at least one element selected from the group consisting of F, Cl, Br and I).

2. The solid electrolyte for a lithium secondary battery according to claim 1, wherein the sulfide compound has an argyrodite-type crystal structure.

3. The solid electrolyte for a lithium secondary battery according to claim 1 or 2, wherein the molar ratio of the $BS_3^{3-}$ unit to

the $PS_4^{3-}$ unit in the sulfide compound is greater than 0 and less than or equal to 1.

4. The solid electrolyte for a lithium secondary battery according to any one of claims 1 to 3, wherein the molar ratio of the $BS_3^{3-}$ unit to the $PS_4^{3-}$ unit in the sulfide compound is 0.1 to 0.4.

5. The solid electrolyte for a lithium secondary battery according to any one of claims 1 to 4, wherein in Formula 1, $0<b\leq0.5$.

6. The solid electrolyte for a lithium secondary battery according to any one of claims 1 to 5, wherein in Formula 1, $0<b<0.25$.

7. The solid electrolyte for a lithium secondary battery according to any one of claims 1 to 6, wherein in Formula 1, $0.125\leq b\leq0.5$.

8. The solid electrolyte for a lithium secondary battery according to any one of claims 1 to 7, wherein in Formula 1, X includes at least one of Cl and Br.

9. The solid electrolyte for a lithium secondary battery according to any one of claims 1 to 8, wherein the ionic conductivity of the sulfide compound is 1 mS/cm to 3 mS/cm.

10. The solid electrolyte for a lithium secondary battery according to any one of claims 1 to 9, wherein the radial distribution function (RDF) for boron (B) of the sulfide compound has a peak in the range of 1.7 Å to 1.9 Å.

11. A lithium secondary battery comprising:

    a cathode;
    an anode disposed opposite the cathode; and
    a solid electrolyte layer disposed between the cathode and the anode,
    wherein at least one of the cathode, the anode, and the solid electrolyte layer comprises the solid electrolyte for a
    lithium secondary battery according to any one of claims 1 to 10.

12. The lithium secondary battery according to claim 11, wherein the solid electrolyte layer comprises the solid electrolyte for a lithium secondary battery.

13. The lithium secondary battery according to claim 11 or 12, wherein one of the cathode and the anode is a lithium electrode.

[FIG. 1]

[Fig. 2A]

[Fig. 2B]

[FIG. 3]

Europäisches
Patentamt
European
Patent Office
Office européen
des brevets

# EUROPEAN SEARCH REPORT

**Application Number**

EP 25 22 1959

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 4 029 826 A1 (MITSUI MINING & SMELTING CO LTD [JP]) 20 July 2022 (2022-07-20) * paragraphs [0027], [0035] - [0039], [0042], [0048] * * example 1 * * pages 1-8 * ----- | 1-13 | INV. H01M10/0562 ADD. H01M10/052 |
| Y | US 2020/251717 A1 (HASEGAWA HAJIME [JP] ET AL) 6 August 2020 (2020-08-06) * paragraphs [0032] - [0037] * ----- | 1-13 | |
| A | US 2024/154154 A1 (LASKOWSKI FORREST A L [US] ET AL) 9 May 2024 (2024-05-09) * claims 16-18; table 3 * ----- | 9,10 | |

**TECHNICAL FIELDS SEARCHED (IPC)**

H01M

The present search report has been drawn up for all claims

| Place of search | Date of completion of the search | Examiner |
|---|---|---|
| The Hague | 12 February 2026 | Standaert, Frans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 22 1959

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| EP 4029826 | A1 | 20-07-2022 | CN | 113366684 A | 07-09-2021 |
| | | | EP | 4029826 A1 | 20-07-2022 |
| | | | JP | 7029573 B2 | 03-03-2022 |
| | | | JP | WO2021049415 A1 | 07-10-2021 |
| | | | KR | 20220061049 A | 12-05-2022 |
| | | | TW | 202116670 A | 01-05-2021 |
| | | | US | 2022109183 A1 | 07-04-2022 |
| | | | WO | 2021049415 A1 | 18-03-2021 |
| US 2020251717 | A1 | 06-08-2020 | CN | 111525091 A | 11-08-2020 |
| | | | EP | 3694034 A1 | 12-08-2020 |
| | | | JP | 7059951 B2 | 26-04-2022 |
| | | | JP | 2020126772 A | 20-08-2020 |
| | | | KR | 20200096738 A | 13-08-2020 |
| | | | US | 2020251717 A1 | 06-08-2020 |
| US 2024154154 | A1 | 09-05-2024 | US | 2024154154 A1 | 09-05-2024 |
| | | | WO | 2023235559 A1 | 07-12-2023 |

For more details about this annex : see Official Journal of the European Patent Office, No. 12/82